# EUROPÄISCHE PATENTSCHRIFT

(11) **EP 2 906 341 B1**
(45) Veröffentlichungstag und Bekanntmachung des Hinweises auf die Patenterteilung: **16.06.2021**
(21) Anmeldenummer: 13774164.1
(22) Anmeldetag: 08.10.2013
(51) Int. Cl.: B01J 20/18, B01J 20/30, B01J 20/28, B01D 53/62, C01B 39/14, C01B 39/20

(54) **BINDEMITTELFREIE KOMPAKTE ZEOLITHISCHE FORMKÖRPER UND VERFAHREN ZU DEREN HERSTELLUNG**
BINDER-FREE COMPACT ZEOLITE PREFORMS AND METHOD FOR THE PRODUCTION THEREOF
CORPS FAÇONNÉS ZÉOLITHIQUES COMPACTS DÉPOURVUS DE LIANTS ET PROCÉDÉ POUR LES FABRIQUER

(30) Priorität: 15.10.2012 DE 102012020217
(43) Veröffentlichungstag der Anmeldung: 19.08.2015
(73) Patentinhaber: Chemiewerk Bad Köstritz GmbH, 07586 Bad Köstritz (DE)
(72) Erfinder: GLEICHMANN, Kristin, 07551 Gera (DE); UNGER, Baldur, 04109 Leipzig (DE); BRANDT, Alfons, 07552 Gera (DE); FISCHER, Gundula, 07646 Stadtroda (DE); RICHTER, Hannes, 07629 Hermsdorf (DE)
(74) Vertreter: Kruspig, Volkmar
(86) Internationale Anmeldenummer: PCT/EP2013/070957
(87) Internationale Veröffentlichungsnummer: WO 2014/060246

(56) Entgegenhaltungen:
- EP-A2- 2 527 296
- WO-A1-2009/109529
- US-A- 4 424 144
- ZHAO ET AL: "Adsorption of carbon dioxide on alkali-modified zeolite 13X adsorbents", 20070616, Bd. 1, Nr. 3, 16. Juni 2007 (2007-06-16), Seiten 355-359, XP022119496,

## Beschreibung

Die Erfindung betrifft kompakte zeolithische Formkörper gemäß Anspruch 1 sowie ein Verfahren zur Herstellung kompakter zeolithischer Formkörper nach Anspruch 4. Ein weiterer Aspekt der vorliegenden Erfindung betrifft die Verwendung solcher kompakten zeolithischen Formkörper für Adsorptionsprozesse oder thermisch-chemische Anwendungen, beispielsweise bei der Energiespeicherung, oder als Katalysator oder Bestandteil eines Katalysators oder als Trägermaterial für Zeolithmembranen gemäß Anspruch 15. Die kompakten zeolithischen Formkörper zeichnen sich durch hohe Adsorptionskapazitäten aus, die nicht durch ein im kompakten zeolithischen Formkörper zusätzlich enthaltenes, adsorptiv inertes Bindemittel oder sonstige adsorptiv inerte Materialien beeinträchtigt werden.

Zeolithe gehören zur Klasse der kristallinen Alumosilikate und wurden ursprünglich als natürliches Mineral entdeckt. Die Zusammensetzung der Stoffgruppe der Zeolithe lässt sich durch die folgende Formel (I) beschreiben:

MnO · Al₂O₃ · x Si02 · y H20 (I)

wobei der Faktor n indirekt die Ladung des Kations M bestimmt, das typischerweise als Alkali- oder Erdalkali-Kation vorliegt. Der Faktor y gibt an, wie viele Wassermoleküle im Kristall enthalten sind. Das molare Verhältnis von SiO₂ zu Al₂O₃ in der Summenformel wird als Modul (x) bezeichnet. Der Modul kann aufgrund der Löwenstein-Regel¹ nicht kleiner als 2 werden.

Wirtschaftliches Interesse haben hauptsächlich synthetische Zeolithe mit Faujasit-Struktur erlangt, bei denen, abhängig von ihrer chemischen Zusammensetzung, zwei Typen unterschieden werden. Produkte mit einem entsprechendem Gerüstaufbau und einem Modul von ≥ 2, jedoch unter 3,0 bezeichnet man als X-Zeolithe, während solche mit einem Modul > 3,0 als Y-Zeolithe bezeichnet werden. Ein weiterer wichtiger Zeolith ist der mit Linde Typ A-Struktur, der eine chemische Zusammensetzung des Zeolithgerüstes aufweist, das durch einen Modul von 2 gekennzeichnet ist.

Durch die frei wählbaren Kationen können die Porengröße und -zugänglichkeit des Zeolithgerüstes beeinflusst und die polaren Eigenschaften des Zeolithtyps verändert werden.

Zeolithe sind auf Grund ihrer hohen chemischen und thermischen Beständigkeit, dem vorliegenden regelmäßigen Porensystem mit Porenöffnungen im Subnanometerbereich sowie der Möglichkeit zur Ausbildung spezifischer Wechselwirkungen mit adsorbierten Molekülen u.a. auf Grund einer variablen Kationenzusammensetzung ideale Adsorptionsmittel und werden in bewährter Weise sowohl in statischen, d.h. nichtregenerativen (z.B. Trocknung des Zwischenscheibenvolumens in Isolierglasfenstern²) als auch in dynamischen, d.h. regenerativen (Trocknung und Reinigung von Gasen und Flüssigkeiten sowie zur Stofftrennung²) Adsorptionsprozessen eingesetzt. Da der Prozess der Adsorption unter Wärmeabgabe, der Prozess der Regeneration (Desorption) hingegen unter Wärmeaufnahme verläuft, kann man Zeolithe auch zur Wärmespeicherung und -wandlung einsetzen und damit einen Beitrag zum aktiven Umweltschutz leisten³. Die im Prozess der Desorption aufgenommene Wärmemenge kann praktisch nach beliebig langer Zeit wieder nahezu vollständig als Adsorptionswärme freigesetzt werden^{4,5}. Bei entsprechender Technologieführung kann der beschriebene Effekt auch zur Kälteerzeugung genutzt werden⁶. Weiterhin werden Zeolithe als Katalysator⁷ bzw. Katalysatorkomponente⁸ oder Komponente für Zeolithmembranen⁹ eingesetzt.

Da in dynamischen (regenerativen) Anwendungen die adsorptiv aktive Komponente in der Regel von einem fluiden Medium umströmt werden muss, verwendet man in der entsprechenden Prozesstechnik sogenannte mit Adsorptionsmittelschüttungen gefüllte Adsorber. Dabei ist, um zu hohe Druckverluste über diesen Schüttungen zu vermeiden, die Verwendung von Zeolithformkörpern einer bestimmten Mindestgröße unumgänglich.

Die bekannten, bereits in der Praxis eingesetzten Verfahren zur Gas- oder Flüssigkeits-aufbereitung¹⁰, wie auch zur Katalyse¹¹ oder Wärmespeicherung¹² und -wandlung arbeiten mit Schüttungen aus zumeist sehr kleinen Körpern, wie Zeolithkugelgranulaten oder -strängen. Das volumenbezogene Adsorptionsvermögen einer solchen Zeolithschüttung hängt von deren Schüttdichte und diese wiederum bei Materialgleichheit von der Raumausfüllung/Packungsdichte ab: Die maximale Raumausfüllung für Kugeln einer einheitlichen Größe beträgt 74% (dichteste Kugelpackung). Um die Effektivität der entsprechenden Prozesse zu erhöhen, wäre eine höhere Raumausfüllung (mehr aktives Material pro Volumen) erstrebenswert. Dies kann theoretisch durch die Verwendung von Gemischen von optimal aufeinander abgestimmten Kugelgrößen erreicht werden. Allerdings sind solche optimierten Gemische nur sehr aufwendig herstellbar und außerdem führt eine höhere Raumausfüllung in der Regel zu einer unerwünschten Erhöhung des Druckverlustes (schlechtere Durchströmbarkeit) einer entsprechenden Schüttung. Eine Alternative stellen Wabenkörper dar. Bereits bei einem Verhältnis von Stegbreite zu Kanaldurchmesser von 1 können mit sechs- und dreieckigen Wabengeometrien über 80% Raumausfüllung erreicht werden (Tabelle 1). Aus geometrischer Überlegung heraus ergibt sich, dass bei einem Verhältnis von Stegbreite zu Kanaldurchmesser von 3 zu 1 alle Geometrien Raumausfüllungen von ca. 95% erreichen. Dabei können Wabenkörper leicht durchströmt werden. Durch das wechselseitige Verschließen von Wabenkanälen kann auch eine zwangsweise Durchströmung der Stege und damit eine weitere Erhöhung der Effizienz erreicht werden. Durch nachträgliches Aufbringen einer dicht kristallisierten Zeolithschicht können diese kompakten zeolithischen Formkörper auch zur größen- oder adsorptions-selektiven Trennung (Membrantrennung) verwendet werden.

**Tabelle 1: Raumausfüllung für eine Kugelschüttung und unterschiedliche Wabengeometrien.**

| Geometrie | Kanalgröße | Stegbreite | Raumausfüllung |
|---|---|---|---|
| Kugelpackung | - | - | 74% |
| Mehrkanalrohr (rund) | 1 | 1 | 72% |
| Quadratwabe | 1 | 1 | 75% |
| Sechseckwabe | 1 | 1 | 82% |
| Dreieckwabe | 1 | 1 | 85% |
| Mehrkanalrohr (rund) | 0,5 | 1,5 | 93% |
| Quadratwabe | 0,5 | 1,5 | 94% |
| Sechseckwabe | 0,5 | 1,5 | 95% |
| Dreieckwabe | 0,5 | 1,5 | 96% |

Des Weiteren hängt das Adsorptionsvermögen von Zeolithschüttungen bzw. -vollkörpern vom Anteil an adsorptions-aktiver Zeolithsubstanz ab.

Da Zeolithpulver (Produkte der klassischen Zeolithsynthese) keine Bindefähigkeit zeigen, werden in der Praxis adsorptions-inerte Bindemittel zur Herstellung entsprechender kompakter Formkörper^{13,14} bzw. Granulate¹⁵ verwendet. Die Einführung des erwähnten Bindemittels verursacht eine "Verdünnung" der Aktivkomponente und führt somit zu geringeren Adsorptionskapazitäten. Weiterhin kann der Einsatz eines adsorptiv-inerten Bindemittels - zumindest ohne Einsatz von zusätzlichen Hilfsstoffen wie Porenbildnern - zur Beeinträchtigung der eigentlich gewünschten Ad- und Desorptionsprozesse an der reinen Zeolithkomponente führen, da oftmals im Prozess der Formgebung durch Aufbaugranulation, Extrusion, etc. eine Verdichtung stattfindet und dabei ein für die Anwendung unvorteilhaftes Transportporensystem ausgebildet wird¹⁵. Bindemittelhaltige zeolithische Formkörper müssen in den meisten Anwendungsfällen jedoch hochporös sein, um die Beweglichkeit der ad- und desorbierenden Moleküle möglichst wenig zu behindern. Hochporöse Formkörper werden beispielsweise durch Zumischen von Porenbildern zur Zeolithpulver-Bindemittel-Mischung vor der Formgebung bindemittelhaltiger zeolithischer Formkörper erhalten. Die zugesetzten Porenbildner werden bei der abschließenden thermischen Aktivierung der Formkörper ausgebrannt und hinterlassen dabei ein entsprechendes Porensystem^{16,17}. Es besteht auch die Möglichkeit des Einsatzes von wasserlöslichen Porenbildnern¹⁸.

Eine weitere Möglichkeit der Herstellung von Zeolith-haltigen, kompakten Formkörpern ist das sogenannte "Washcoating". Dabei werden adsorptiv bzw. katalytisch aktive Pulver auf inerte oder gering aktive, kompakte Grundkörper (z.B. Wabenkörper) als äußere Zeolithschicht aufgebracht, dieses ebenfalls unter Verwendung eines nichtzeolithisches Bindemittels^{19,20}.

In neusten Publikationen wird die Kristallisation von z.B. Zeolith ZSM-5 direkt auf einem Aluminiumschaum beschrieben²¹. Dieses Verfahren ist jedoch relativ komplex und liefert nur relativ dünne Zeolithschichten auf den Aluminiumstegen.

Eine Verbesserung der Wirkung der Zeolithschüttungen in Adsorptionsprozessen konnte durch die Einführung von sogenannten bindemittelfreien Zeolithkugelgranulaten oder - strängen erzielt werden^{18, 22-26}. Durch das Ausbilden des gut ausgeprägten Transportporensystems in den Granalien werden die Nachteile der Schüttungen des bindemittelhaltigen Kugelgranulats erheblich reduziert²⁴. Sie sind durch einen möglichst geringen Anteil an Mesoporen (2 nm bis 50 nm), aber möglichst vielen Makroporen (>50 nm) gekennzeichnet²⁷. Die Gleichgewichtsadsorptionskapazitäten entsprechen denen eines Zeolithpulvers mit identischer chemischer Zusammensetzung¹⁵.

Der Stand der Technik beschreibt klassisch hergestellte kompakte Formkörper basierend auf Bindemittel, deren Bindemittelanteil zu einer erheblichen Reduktion des adsorptiv bzw. katalytisch aktiven Anteils führt. Diese können durch Extrusion aus einer Mischung bestehend aus Zeolith, einer Mischung aus Zwei- und Dreischichttonmineralen, anorganischen Fasermaterialien (z.B. Glasfaser²⁸, Zirkondioxid²⁹) und Glucanen hergestellt werden³²⁸. Bei solchen Produkten ist die Gleichgewichtswasseradsorptionskapazität um den Anteil des eingesetzten, adsorptiv-inerten Bindemittels reduziert. Außerdem zeigt sich die offensichtlich unzureichende Porosität des Transportporensystems durch die sehr langsam verlaufende Wasseraufnahme.

Siloxan-Verbindungen sind ebenfalls als geeignete Bindemittel zur Herstellung von Zeolith 3A, 4A, 5A oder X-Wabenkörpern beschrieben³⁰. Neben der Tatsache, dass auch aus den Siloxan-Verbindungen bei der Verarbeitung adsorptiv-inerte Bindemittel entstehen, wird das in den Siloxanderivaten - wenn auch in geringer Menge - enthaltende Lösemittel, welches nur unter lösemittelspezifischen Sicherheitsvorschriften entfernt werden kann, als nachteilig für dieses Verfahren erachtet. Die weiterhin für dieses Verfahren beschriebene, niedrige Aktivierungstemperatur von max. 280 °C spricht zwar für einen Energie einsparenden Aktivierungsprozess, allerdings kann der erforderliche Aktivierungszustand der fertigen Formkörper bei diesen Temperaturen, wenn überhaupt, nur innerhalb sehr langer Aktivierungszeiten erreicht werden. "Aktivieren" beschreibt in der vorliegenden Arbeit eine Temperaturbehandlung des zeolithischen Materials, bei der der Zeolith in den für die Anwendung der kompakten zeolithischen Formkörper benötigten Aktivierungszustand versetzt wird, d.h., einen für die Anwendung vernachlässigbaren Restfeuchtegehalt zurück behält.

Zur Verbesserung der Transportporenstruktur bei der Herstellung kompakter, bindemittelhaltiger Zeolithformkörper wird die Verwendung von Porenbildnern beschrieben³¹. Nachteilig hierbei sind die zur Entfernung der Porenbildner und Verfestigung des Bindemittels erforderlichen hohen Temperaturen (bis 850 °C). Auch in diesem Fall wird die Adsorptionskapazität durch den Anteil an adsorptions-inertem Bindemittel herabgesetzt.

Die EP 2 527 296 A2 offenbart ein bindemittelfreies zeolithisches Granulat sowie ein Verfahren zur Herstellung eines derartigen bindemittelfreien zeolithischen Granulats. Gemäß der dortigen Lösung erfolgt ein intensives Vermischen von pulverförmigen Zeolith vom Typ NaY mit einem molaren SiO₂/Al₂O₃-Verhältnis von >3,0 mit einem pulverförmigen, thermisch behandelten Kaolin oder Metakaolin mit anschließender Zugabe einer Lösung, bestehend aus Natriumsilikat und vorzugsweise Natronlauge, der abermals ein intensives Mischen folgt. Diese Mischung wird dann auf übliche Weise unter Zusatz von Wasser zu Granulat verformt, getrocknet, vorzugsweise gewässert und mit einer Lösung, bestehend aus Natriumsilikat und Natriumlauge behandelt. Im Anschluss wird das Material von der Lösung getrennt, gewaschen, getrocknet und getempert.

Bei der WO 2009/109529 A1 wird ausschließlich auf die Herstellung von Kugelgranulat als Schüttgut eingegangen. Die Schaffung kompakter zeolithischer Formkörper ist auch in dieser Druckschrift nicht offenbart.

Aus Zhao et al. "Adsorption of carbon dioxide on alkali-modified zeolite 13X adsorbents" ist die Extrusion von zeolithischem Schüttgut bekannt. Auch dort geht es nicht um kompakte zeolithische Formkörper.

Die US 4 424 144 A offenbart ausschließlich Zeolithe in Form von Schüttgut.

Unter Berücksichtigung des vorher beschriebenen Standes der Technik besteht daher die Aufgabe, kompakte zeolithische Formkörper zu schaffen, die die Nachteile des Stands der Technik nicht aufweisen. Insbesondere besteht ein Bedarf an kompakten zeolithischen Formkörpern, die keine zusätzlichen Binder oder Verfestigungsmaterialien enthalten und die damit einen möglichst hohen Anteil an Zeolith in einem definierten Volumen aufweisen.

Weiterhin besteht die Aufgabe, ein möglichst effizientes technisches Verfahren anzugeben, das die kostengünstige Herstellung von mechanisch stabilen, kompakten zeolithischen Formkörpern erlaubt. Die hergestellten kompakten zeolithischen Formkörper sollten vorzugsweise einen maximalen Gehalt an aktivem Zeolithmaterial, beispielsweise in Form der Zeolithe mit Faujasit-Struktur (umfasst sowohl Zeolith X als auch Zeolith Y) oder Linde Typ A-Struktur aufweisen.

Die Lösung der genannten Aufgabe erfolgt durch die Lehre der Ansprüche 1, 4 und 15, wobei die Unteransprüche Ausgestaltungen und Weiterbildungen umfassen.

Wenn im weiteren Text der Begriff "Wasseraufnahmekapazität" verwendet wird, so ist damit die an bei 450 °C über einen Zeitraum von zwei Stunden thermisch behandelten Materialien bei einer Temperatur von 20 °C und einer relativen Feuchte von 55 % bestimmte Gleichgewichts-Adsorptionskapazität für Wasser gemeint.

Ein erster Aspekt der vorliegenden Erfindung betrifft kompakte zeolithische Formkörper, die dadurch gekennzeichnet sind, das sie einen mittels geeigneter Adsorptionsmethoden bestimmten Zeolithanteil von mindestens 90% und vorzugsweise mindestens 95% aufweisen. Für die Ermittlung des auf dieser Weise bestimmten Zeolithanteils wurden die Wasseradsorptionskapazitäten der die Erfindung betreffenden kompakten zeolithischen Formkörper und des Ausgangszeolithpulvers der gleichen Zeolithstruktur und gleichen chemischen Zusammensetzung ins Verhältnis gesetzt. Die erfindungsgemäßen kompakten zeolithischen Formkörper beruhen vorzugsweise auf Zeolith Y, vorzugsweise mit einem Modul größer 4,9, besonders bevorzugt im Bereich von 4,9 bis 5,5, oder Zeolith X oder Zeolith A oder einem Gemisch von Zeolithtypen.

Ein kompakter zeolithischer Formkörper, wie dieser Begriff im Zusammenhang mit der vorliegenden Erfindung gebraucht wird, ist ein Formkörper, der vorzugsweise eine Raumausfüllung von 80 % oder mehr, besonders bevorzugt 85% oder mehr und am meisten bevorzugt 90 % oder mehr aufweist. Keine Formkörper im Rahmen der vorliegenden Erfindung sind Formkörper, aus denen konventionelle Adsorptionsmittel- oder Katalysatorschüttungen generiert werden können (z.B. in Form von Kugeln oder kurzen extrudierten (ggf. auch hohlen) Strangformkörpern). Auch Kugelgranulate, deren Kugelgrößen, wie vorstehend beschrieben, optimal aufeinander abgestimmt sind, fallen nicht unter die Definition eines kompakten zeolithischen Formkörpers. Entscheidend ist, dass der kompakte zeolithische Formkörper in seiner Verwendung als solcher eingesetzt wird, und nicht in Form einer Schüttung einer Vielzahl von Körpern, die insgesamt die Eigenschaften einer Schüttung aufweisen.

Hinsichtlich der Form unterliegen die kompakten zeolithischen Formkörper gemäß der vorliegenden Erfindung keinen relevanten Beschränkungen. Die erfindungsgemäßen kompakten zeolithischen Formkörper können beispielsweise die Form einer Platte, eines Rohrs, eines Vollzylinders oder einer Wabe aufweisen. Es ist jedoch bevorzugt, dass sie eine möglichst hohe Raumausfüllung bei gleichzeitig vergleichweise sehr guter Durchströmbarkeit aufweisen, was beispielsweise bei einer Wabenform mit breiten Stegen und schmalen Kanälen gegeben ist.

Für die kompakten zeolithischen Formkörper gemäß dieser Erfindung ist es bevorzugt, dass sie im Wesentlichen frei von nicht-zeolithischen Bestandteilen sind.

Im Rahmen der vorliegenden Erfindung sind Zeolithe mit Faujasit- oder Linde Typ A-Struktur, oder Gemische beider Zeolithtypen bzw. deren Verwendung in dem im Folgenden beschriebenen Verfahren, bevorzugt.

Die erfindungsgemäßen kompakten zeolithischen Formkörper weisen, wenn sie auf Basis von Zeolith mit Linde Typ A-Struktur hergestellt wurden, vorzugsweise eine Wasseraufnahmekapazität von mindestens 22 Gew.-%, besonders bevorzugt von mindestens 24 Gew.-% auf. Wenn die erfindungsgemäßen kompakten zeolithischen Formkörper aus Zeolith X hergestellt wurden, weisen sie eine Wasseraufnahmekapazität von mindestens 27 Gew.-%, besonders bevorzugt von mindestens 29 Gew.-% und am meisten bevorzugt von mindestens 30 Gew.-% auf. Wenn die erfindungsgemäßen kompakten zeolithischen Formkörper hingegen auf Zeolith Y beruhen, weisen sie vorzugsweise eine Wasseraufnahmekapazität von mindestens 27 Gew.-%, besonders bevorzugt von mindestens 28 Gew.-% und am meisten bevorzugt von mindestens 29 Gew.-% auf.

Ein weiterer Aspekt der vorliegenden Erfindung betrifft ein Verfahren zur Herstellung kompakter zeolithischer Formkörper, das dadurch gekennzeichnet ist, dass a) ein formbares Gemisch, umfassend Zeolith und eine oder mehrere Zeolith-Vorläufer-Komponenten und gegebenenfalls Wasser und gegebenenfalls ein oder mehrere organische Zusatzstoffe zu Formkörpern verarbeitet wird, b) die so erhaltenen Formkörper einer thermischen Behandlung unterzogen werden, und c) die thermisch behandelten Formkörper gewässert, gealtert und mit einer weiteren Komponente in Kontakt gebracht werden, aus der in Kombination mit den Zeolith-Vorläufer-Komponenten Zeolith herstellbar ist und Bedingungen ausgesetzt werden, unter denen sich aus der weiteren Komponente und den Zeolith-Vorläufer-Komponenten Zeolith bildet.

In diesem Verfahren wird als Ausgangsmaterial vorzugsweise pulverförmiger Zeolith eingesetzt, der, bedingt durch seinen strukturellen Aufbau, allerdings nicht in reiner Form plastifizierbar ist und somit für plastische Formgebungsverfahren kein bevorzugtes Ausgangsmaterial darstellt. Dieser Zeolith wird mit einer oder mehreren Zeolith-Vorläufer-Komponenten vermischt. Bei der Haupt-Zeolith-Vorläufer-Komponente handelt es sich vorzugsweise um Tonminerale mit der chemischen Zusammensetzung Al₂Si₂H₄O₉, wie Kaolinit oder Halloysit. Weitere Zeolith-Vorläufer-Komponenten können beispielsweise Natronlauge oder Natronwasserglas sein. Da die Zeolith-Vorläufer-Komponenten im Rahmen des erfindungsgemäßen Verfahrens in Zeolith umgewandelt werden sollen, müssen sie im Wesentlichen aus chemischen Elementen/Verbindungen bestehen, die auch im entsprechenden Zeolith enthalten sind.

Gemäß dem Stand der Technik lässt sich Kaolin, der als Hauptbestandteil Kaolinit enthält, als Bindemittel in z.B. für die Extrusion vorgesehene Stoffgemische nur sehr schwer einsetzen, da diese Gemische unter Umständen gegenüber anderen Systemen deutlich schwieriger plastifizierbar sind.

Um die Plastizität der zu verformenden Masse zu verbessern können dem Ausgangsgemisch, bestehend aus Zeolith und den Zeolith-Vorläufer-Komponenten Wasser und/oder organische Komponenten mit temporärer Binderwirkung und/oder Gleitmittel in geeigneten Mengen als Additive zugegeben werden.

Die erhaltene Masse wird anschließend im Rahmen des Schritts a) durch ein geeignetes Verfahren zu Formkörpern verarbeitet, d.h. in die gewünschte Form gebracht. Als vorzugsweise Verfahren werden Extrusion, Pressen oder Gießen verwendet.

In einer besonders bevorzugten Ausführungsform erfolgt die Verarbeitung zu Formkörpern durch Extrusion. Bei der Extrusion können die im Stand der Technik bekannten Aggregate eingesetzt werden. Das in einem Doppelwellenkneter hergestellte, plastische Gemisch wird mit einem Vakuumschneckenextruder vorzugsweise zu Endlossträngen extrudiert, wobei die Stränge anschließend auf eine handhabbare Länge gekürzt und anschließend vorzugsweise auf 5 bis 20% Trockenverlust, besonders bevorzugt auf 5 bis 10% Trockenverlust, getrocknet werden. Unter Trockenverlust wird die Wassermenge verstanden, die die untersuchte Probe bei einer Behandlung bei 105 °C innerhalb einer Stunde verliert.

In einer weiteren besonders bevorzugten Ausführungsform erfolgt die Verarbeitung zu Formkörpern durch Pressen einer Mischung aus Zeolith, Zeolith-Vorläufer-Komponenten und/oder Wasser und/oder einem oder mehreren organischen Zusatzstoffen, vorzugsweise einer Polyvinylalkohol-Lösung.

Bei der Verarbeitung durch Pressen ist es zudem bevorzugt, dass zunächst ein Granulat aus einem Kaolin-Zeolith-Gemisch vorzugsweise mittels eines thermischen Granulierverfahrens gemäß Stand der Technik, besonders bevorzugt mittels eines mechanischen Granulierverfahrens gemäß Stand der Technik durch Zugabe einer Lösung bestehend aus einem oder mehrerer organischer Komponenten mit temporärer Binderwirkung in einen Mischer, welcher das Kaolin-Zeolith-Gemisch enthält, hergestellt wird. Nach Homogenisierung kann das so erhaltene Granulat getrocknet und auf einer Trockenpresse zu Formkörpern gepresst werden.

In einer weiteren besonders bevorzugten Ausführungsform erfolgt die Verarbeitung zu Formkörpern durch Gießen einer Zeolith-Kaolin-Wasser-Mischung (ggf. unter Zusatz von weiteren Komponenten) in eine trockene Gipsform.

Bei der Verarbeitung durch Gießen ist es bevorzugt, dass die Kaolin-Zeolith-Mischung mit deionisiertem Wasser und einem Dispergiermittel (vorzugsweise bifunktionelle Carbonsäuren) in einer Mahltrommel mit Hilfe von Mahlkugeln zu einem homogenen, gießfähigen Schlicker verarbeitet wird. Der so hergestellte Schlicker wird in eine poröse Form gegossen. Die Form entzieht der Zeolith-Kaolin-Wasser-Mischung das Wasser, wodurch sich ein sogenannter Scherben bildet, der nach einer entsprechenden Standzeit aus dieser Form entnommen und anschließend getrocknet wird.

Als Ausgangsmaterial wird im erfindungsgemäßen Verfahren vorzugsweise ein getrocknetes Zeolithpulver vom Typ 4A oder X oder Y, dieser bevorzugt mit einem Modul größer 4,9, besonders bevorzugt im Bereich von größer 4,9 bis 5,5, verwendet. Die beschriebenen Zeolithpulver können auch als Filterkuchen oder als Slurry eingesetzt werden, wobei der entsprechende Feuchtegehalt bei der Herstellung der zu verformenden Masse berücksichtigt werden muss.

Es ist wünschenswert, dass die Haupt-Zeolith-Vorläufer-Komponente einen Anteil an nicht in Zeolith umwandelbaren Bestandteilen, wie beispielsweise Glimmer oder Quarz, von 5 Gew.-%, und vorzugsweise von 1 Gew.-% nicht überschreitet.

Der Zeolith und die Zeolith-Vorläufer-Komponenten werden vorzugsweise in einem Gewichts-Verhältnis von 10:1 bis 1:10, besonders bevorzugt 1:1 bis 6:1, in das formbare Gemisch in Schritt a) des beschriebenen Verfahrens eingesetzt. In das Gemisch können nach Bedarf zusätzlich organische Komponenten mit temporärer Binderwirkung und/oder Gleitmittel und/oder Wasser, wie für ähnliche Systeme im Stand der Technik beschrieben, eingearbeitet werden.

Im Schritt b) des oben beschriebenen Verfahrens werden die aus dem Schritt a) erhaltenen Formkörper einer thermischen Behandlung unterzogen. Dabei ist es bevorzugt, wenn die Formkörper auf Temperaturen von 550°C bis 850°C, vorzugsweise 550°C bis 650°C, erhitzt werden. Für diese thermische Behandlung ist es zweckmäßig, wenn die Formkörper vor der thermischen Behandlung zunächst getrocknet werden, vorzugsweise auf einen Trockenverlust von 5 - 10 %. Während der thermischen Behandlung werden eventuell noch vorhandene organische Bestandteile entfernt, die Zeolith-Vorläufer-Komponenten einer Strukturumwandlung unterzogen und die Grundkörper verfestigt. Anschließend werden die so erhaltenen Formkörper rissfrei abgekühlt.

An diesem Punkt der Technologiekette können die Formkörper, wenn nötig, auf die gewünschte Form zurechtgeschnitten werden.

Bevor die thermisch behandelten Formkörper mit einer weiteren Komponente in Kontakt gebracht werden, werden sie im Schritt c) vorzugsweise einer Wässerung unterzogen. Dazu werden die thermisch behandelten Formkörper mit Wasser oder einer verdünnten Natronlauge (zwischen 0,5%iger und 5%iger, vorzugsweise zwischen 1%iger und 2%iger NaOH-Lösung) behandelt.

Bei der weiteren Komponente, die mit den thermisch behandelten Formkörpern ebenfalls während des Schritts c) in Kontakt gebracht wird, handelt es sich um eine Komponente, die gegebenenfalls chemische Elemente oder Verbindungen in ihrer Art oder Menge, die den Zeolith-Vorläufer-Komponenten gegenüber dem im Schritt c) herzustellenden Zeolith fehlen, enthält. Vorzugsweise handelt es sich bei der weiteren Komponente um eine Alkalisilikat- oder Alkalialuminatlösung, besonders bevorzugt um eine Natriumsilikat- oder eine Natriumaluminatlösung. Es ist weiterhin bevorzugt, dass, falls im Zuge des Schrittes c) Zeolith mit Faujasit-Struktur gebildet werden soll, als weitere Komponente eine Alkalisilikatlösung verwendet wird, während es bei der beabsichtigten Herstellung von Zeolith mit Linde Typ A-Struktur im Schritt c) bevorzugt ist, wenn als weitere Komponente eine Alkalialuminatlösung verwendet wird.

Das Inkontaktbringen der thermisch behandelten Formkörper mit der weiteren Komponente im Schritt c) erfolgt vorzugsweise bei einer Temperatur im Bereich von 75 °C bis 100 °C und besonders bevorzugt im Bereich von 80 °C bis 95 °C. Bei diesem Schritt ist es weiterhin bevorzugt, dass die weitere Komponente mit den Zeolith-Vorläufer-Komponenten über einen Zeitraum von 1 bis 48 Stunden, vorzugsweise 8 bis 24 Stunden, in Kontakt gebracht wird. In einer besonders bevorzugten Ausführungsform umfasst das Inkontaktbringen der weiteren Komponente mit den Zeolith-Vorläufer-Komponenten zusätzlich zu der vorher beschriebenen Temperaturbehandlung eine dieser Temperaturbehandlung vorausgehende Alterung, die bei einer Temperatur von 15 °C bis 60 °C, vorzugsweise 20 °C bis 35 °C, über einen Zeitraum von 0,5 h bis 24 h, vorzugsweise von 1 h bis 5 h, erfolgt. Dabei ist es unwesentlich, ob eine Lösung der weiteren Komponente für die Alterung und die Temperaturbehandlung verwendet wird, oder ob für die Alterung eine erste Lösung der weiteren Komponente verwendet wird, während für die Temperaturbehandlung eine zweite Lösung verwendet wird. Die zweite Lösung kann hinsichtlich ihrer Zusammensetzung gleich oder verschieden von der ersten Lösung sein.

Weiterhin ist es bevorzugt, wenn das erhaltene Produkt aus dem in den vorherigen Abschnitten beschriebenen Verfahren nach gegebenenfalls durchgeführter Wässerung und/oder gegebenenfalls durchgeführter Alterung und beschriebener Behandlung bei 80 °C bis 95 °C mit einer oder mehreren Waschlösungen in Kontakt gebracht wird. Bei diesen Waschlösungen handelt es sich vorzugsweise um Wasser, besonders bevorzugt um deionisiertes Wasser und oder Natronlaugelösungen, letztere vorzugsweise mit einer Konzentration von 0,01 bis 10%, und besonders bevorzugt mit einer Konzentration von 0,5 bis 5%. Das Produkt kann nach dem Waschen mit der Waschlösung zusätzlich noch mit Wasser, vorzugsweise deionisiertem Wasser, gewaschen, anschließend getrocknet und, darauf folgend aktiviert werden.

In einer besonders bevorzugten Ausführungsform werden die erfindungsgemäßen kompakten zeolithischen Formkörper im Rahmen des Schritts c) folgendermaßen behandelt:
Die in Schritt b) erhaltenen kompakten Formkörper werden zunächst einer *"Wässerung"* unterzogen. Dazu wird das Material in einem Rührgefäß oder in einer mit kompakten Formkörpern gefüllten Säule kontinuierlich mit Waschwasser oder einer verdünnten Natronlauge (zwischen 0,5% und 5%, vorzugsweise zwischen 1 und 2%iger NaOH-Lösung) durchströmt. Das Gewichts-Verhältnis vollentsalztes Wasser oder Natronlauge zu kompakten Rohformkörpern liegt bei 5:1 bis 50:1, vorzugsweise zwischen 8:1 und 18:1. Die Wässerung erfolgt bei einer Temperatur zwischen 15 °C und 40 °C, vorzugsweise bei Raumtemperatur. Innerhalb von 3 min bis 120 min, vorzugsweise von 15 min bis 60 min ist der Wässerungsvorgang abgeschlossen. Die kompakten, gewässerten Formkörper werden vorzugsweise in einer wässrigen Reaktionslösung bestehend aus Natriumsilikat und Natronlauge im Fall der Umwandlung von nicht-zeolithischem Material in Zeolith mit Faujasit-Struktur und in einer wässrigen Reaktionslösung bestehend aus Natriumaluminat und Natronlauge im Fall der Umwandlung nicht-zeolithischer Bestandteile in Zeolith mit Linde Typ A-Struktur gealtert, d. h., das Material wird bei 15 °C bis 60 °C, vorzugsweise zwischen 20 °C und 35 °C für 0,5 h bis 24 h, vorzugsweise für 0,5 h bis 5 h in der jeweiligen Lösung belassen. Die anschließende Umwandlung der nicht-zeolithischen Bestandteile in Zeolith kann in einem geeigneten Gefäß, vorzugsweise einem Rührgefäß oder auch in einer kontinuierlich mit der Reaktionslösung ähnlicher Konzentration oder der selben Lösung wie sie für die Alterung verwendet wurde, durchströmten, mit den kompakten Formkörpern gefüllten Säule, durchgeführt werden. Dabei liegt das Gewichts-Verhältnis Reaktionslösung zu kompakten Formkörpern zwischen 5:1 bis 50:1, vorzugsweise 8:1 bis 18:1. Die Reaktionstemperatur ist zwischen 75 °C und 100 °C, vorzugsweise zwischen 80 °C und 95 °C zu wählen. Die Zeit bis zum Erreichen vollständig aus Zeolith bestehender kompakter Formkörper liegt zwischen 8 h und 48 h. Nach Ende der Reaktionszeit werden die kompakten zeolithischen Formkörper mit vollentsalztem Wasser so lange gewaschen bis der pH-Wert unter 12 liegt. Durch einen vorgeschalteten Waschschritt mit verdünnter Natronlauge einer Konzentration zwischen 0,01% und 10%, vorzugsweise zwischen 0,5 und 5%iger NaOH-Lösung kann die Waschwassermenge reduziert werden.

Die verbrauchte Reaktionslösung aus dem Umwandlungsschritt kann aufgearbeitet und für einen folgenden Behandlungsschritt mit neuen kompakten Formkörpern wieder verwendet werden.

Ein weiterer Aspekt der vorliegenden Erfindung betrifft vollständig aus Zeolith bestehende kompakte Formkörper, im Folgenden kompakte zeolithische Formkörper genannt, die gemäß einem wie vorstehend beschriebenen Verfahren erhältlich sind. Diese kompakten zeolithischen Formkörper weisen vorzugsweise einen mittels geeigneter Adsorptionsmethoden bestimmten Zeolithanteil von mindestens 90% und vorzugsweise mindestens 95% auf.

Die erfindungsgemäßen kompakten zeolithischen Formkörper bestehen vorzugsweise aus Zeolith Y, vorzugsweise mit einem Modul größer 4,9, besonders bevorzugt im Bereich von größer 4,9 bis 5,5, oder Zeolith X oder Zeolith A.

Die nach diesem Verfahren herstellbaren kompakten zeolithischen Formkörper können beispielsweise in Form einer Wabenstruktur, eines Ein- oder Mehrkanalrohrs, einer Platte oder eines Vollzylinders vorliegen.

Im Zusammenhang mit der Extrusion wurde überraschend festgestellt, dass über die beschriebene Technologiekette ausgehend von Zeolith und Zeolith-Vorläufer-Komponenten, die für die Extrusion keine optimalen Ausgangsstoffe darstellen, über die Verfestigung sowie die Umwandlung der Zeolith-Vorläufer-Komponenten in Zeolith für die genannten Anwendungen, hinreichend mechanisch stabile, rissfreie, kompakte, bindemittelfreie, zeolithische Formkörper hergestellt werden können, bei denen die im Stand der Technik beschriebenen Nachteile bekannter Produkte nicht beobachtet werden.

Es wurde weiterhin überraschenderweise festgestellt, dass mit Hilfe der Formgebungsverfahren Pressen oder Gießen in der Technologiekette nach der Umwandlung des verwendeten Zeolith-Vorläufers in Zeolith mechanisch stabile, rissfreie, kompakte, bindemittelfreie, zeolithische Formkörper erhalten werden können.

Ein weiterer Aspekt der vorliegenden Erfindung betrifft die Verwendung der vorstehend beschriebenen kompakten zeolithischen Formköper als Adsorptionsmittel, beispielsweise zur Gasaufbereitung in technischen Adsorptionsprozessen. Weitere bevorzugte Verwendungen der erfindungsgemäßen Formköper betreffen Verfahren zur thermischchemischen Energiespeicherung, beispielsweise in Wärmepumpen oder zur Kälteerzeugung, als Katalysator bzw. Katalysatorkomponente oder als Träger für Zeolithmembranen.

Die erfindungsgemäßen kompakten zeolithischen Formkörper zeigen einen röntgenographisch bestimmten Zeolithanteil zwischen 86 und 100%. Da die GleichgewichtsAdsorptionskapazitäten nur geringfügig unter denen der eingesetzten Ausgangszeolithpulver liegen, kann davon ausgegangen werden, dass die kompakten zeolithischen Formkörper aus annähernd 100% Zeolith bestehen, aber, wie schon in²³ beschrieben, ein Teil dieses Zeoliths röntgenographisch nicht erfassbar ist. Offensichtlich treten bei beiden Verfahren trotz unterschiedlicher Herstellmethoden ähnliche Phänomene auf.

Durch das erläuterte Herstellverfahren wurde somit das Ziel erreicht, kompakte zeolithische Formkörper, die eine hohe Raumerfüllung mit aktiver Zeolithmaterie aufweisen, herzustellen. Die verschiedenen keramischen Formgebungstechnologien gestaltet das Herstellverfahren in der Hinsicht flexibel, dass genau die Formkörpergeometrie produziert werden kann, die für die spätere Anwendung am vorteilhaftesten erscheint.

Anhand der folgenden Beispiele soll das Prinzip der vorliegenden Erfindung näher erläutert werden, ohne jedoch dessen Schutzumfang in irgendeiner Weise zu beschränken.

### Ausgangsmaterial 1: Zeolith 4A

Für die hier beschriebenen Beispiele für die Herstellung von kompakten bindemittelfreien Zeolith 4A-Formkörpern wurde Zeolith 4A (Zeolon, MAL AG) mit folgenden Eigenschaften verwendet:

| | |
|---|---|
| Wasseraufnahmekapazität | 24,8% |
| d₅₀ (mittlerer Teilchendurchmesser) | 3,7 µm |
| Glühverlust | 20,0% |

Teilchendurchmesser: "Mastersizer 2000" und Dispergiereinheit "Hydro 2000 S" der Fa. Malvern Instruments
Glühverlust: Masseverlust nach 1 h bei 950 °C

**Ausgangsmaterial 2:** Zeolith X

Für die hier beschriebenen Beispiele für die Herstellung von kompakten bindemittelfreien Zeolith X-Formkörpern wurde Zeolith X (KÖSTROLITH® NaMSX, Chemiewerk Bad Köstritz GmbH) mit folgenden Eigenschaften verwendet:

| | |
|---|---|
| Modul (RFA) | 2,34 |
| Wasseraufnahmekapazität | 30,8% |
| dso | 3,6 µm |
| Glühverlust | 21,1% |

Modul: Röntgenfluoreszenzspektrometer "S4 EXPLORER" der Fa. Bruker-AXS GmbH, Karlsruhe, Softwarepaket "SPECplus"

### Ausgangsmaterial 3: Zeolith Y

Für die hier beschriebenen Beispiele für die Herstellung von kompakten bindemittelfreien Zeolith Y-Formkörpern wurde Zeolith Y (CBV100, Zeolyst International) mit folgenden Eigenschaften verwendet:

| | |
|---|---|
| Modul (RFA) | 5,3 |
| Wasseraufnahmekapazität | 29,1% |
| dso | 4,5 µm |
| Glühverlust | 25,2% |

### Ausgangsmaterial 4: Kaolin

Der eingesetzte kommerziell erhältliche Kaolin KF-2 (Prosco Ressources) weist folgende Eigenschaften auf:

| | |
|---|---|
| SiO₂ / Gew.-% | 53,1 |
| Al₂O₃ / Gew.-% | 44,1 |
| Quarzgehalt / % | 2 |

SiO₂, Al₂O₃-Gehalt: Röntgenfluoreszenzspektrometer "S4 EXPLORER" der Fa. Bruker-AXS GmbH, Karlsruhe, Softwarepaket "SPECplus"
Quarzgehalt: Röntgenpulverdiffraktometer (XRD) "D4 ENDEAVOR" der Fa. Bruker-AXS GmbH, Karlsruhe, Softwarepaket "DIFFRACplus"

### Konventioneller bindemittelhaltiger Wabenkörper vom Zeolithtyp 4A

Zum Vergleich wird ein Wabenkörperendlosstrang aus einer im Doppelwellenkneter hergestellten plastischen Masse bestehend aus 78 Gew.-% Zeolith 4A und 18 Gew.-% Bentonit (Ceratosil; anorganisches Bindemittel), 2 Gew.-% organische Komponente mit temporärer Binderwirkung (Tylose CER 40600) und 2 Gew.-% Glycerin und Wasser durch Extrusion mit einem Vakuumschneckenextruder hergestellt. Für die sich anschließende Trocknung wird der Strang in ca. 300 mm lange Wabenstücke geschnitten und bei 60 °C getrocknet. Nach dem Trocknen werden die Waben in 9 cm lange Stücke geschnitten und anschließenden bei 600°C thermische behandelt. Bei dieser Temperaturbehandlung werden die organischen Stoffe und Wasser entfernt sowie das Gefüge der Wabe durch das anorganische Bindemittel verfestigt.

### Vergleichsmaterial 1: Zeolith 3A-Pulver

Das kommerziell erhältliche Zeolith 3A-Pulver (Luoyang Jianlong Chemical Industrial Co., LTD.) weist folgende Eigenschaften auf:

| Ionenaustauschgrad / % | Wasseraufnahmekapazität / % |
|---|---|
| 58 | 25,7 |

Ionenaustauscharad: Röntgenfluoreszenzspektrometer "S4 EXPLORER" der Fa. Bruker-AXS GmbH, Karlsruhe, Softwarepaket "SPECplus"

### Vergleichmaterial 2: (Zeolith 5A-Pulver)

Das Zeolith 5A-Pulver (Chemiewerk Bad Köstritz GmbH) weist folgende Eigenschaften auf:

| Ionenaustauschgrad / % | Wasseraufnahmekapazität / % |
|---|---|
| 74 | 22,8 |

Alle durchgeführten analytischen Untersuchungen zeigten, dass die Formkörper stets homogen sind, sowohl nach der Umwandlung der Zeolith-Vorläufer-Komponente in Zeolith als auch nach dem Ionenaustausch.

### Beispiel 1 (erfindungsgemäß)

Ausgehend von 2250 g Zeolith 4A-Pulver (Ausgangsmaterial 1) und 990 g Kaolin (Ausgangsmaterial 4) wird mittels 5 Gew.-% der organischen Komponente mit temporärer Binderwirkung MHPC 20000, 2% Glycerin und Wasser eine plastische Masse in einem Doppelwellenkneter hergestellt. Die Formgebung der plastifizierten Masse erfolgt in einem Vakuumschneckenextruder. Dabei wird die Masse in der Vakuumkammer des Extruders entlüftet und mittels einer Pressschnecke durch ein formgebendes Werkzeug zu einer Wabenform gepresst. Die gebildete Wabe entsteht als kompakter Endlosformkörper. Er wird nach der Extrusion auf eine für die nachfolgenden technologischen Schritte geeignete Länge von 100 mm geschnitten, auf einen Trockenverlust von 5% getrocknet und danach liegend auf Brennhilfsmitteln bei 550°C getempert.

Mittels Diamanttrennscheiben werden die kompakten, getemperten Waben trocken auf 9 cm Länge geschnitten.

Nach der Temperung werden die nicht-zeolithischen Bestandteile der Waben in Zeolith mit Linde Typ A-Struktur umgewandet. Dafür werden Waben mit einem Gesamtgewicht von 50 g mit 300 ml deionisiertem Wasser gewässert, d.h. 30 min in Wasser belassen. Nach Ablauf der vorgegebenen Zeit wird das Wasser weitestgehend abgegossen und durch die Reaktionslösung ersetzt. Diese besteht aus 500 ml deionisiertem Wasser, 38 g 50%iger Natronlauge und 8,5 g Natriumaluminat (20% Na₂O, 20% Al₂O₃). Die Waben werden in dieser Lösung 1 h bei Raumtemperatur gealtert und anschließend auf 85 °C erhitzt und bei dieser Temperatur für 16 h gehalten.

Nach Ablauf der Reaktionszeit wird das Material abgekühlt und die überstehende Lösung durch Dekantieren entfernt. Die Waben werden drei mal mit je 200 ml vollentsalztem Wasser gewaschen, mit Hilfe von Unterdruck über einen Büchner-Trichter möglichst trocken filtriert, anschließend unter einer IR-Lampe vollkommen getrocknet und abschließend innerhalb von 2 h bei 450 °C aktiviert.

Das auf diese Weise hergestellte Material zeigt eine Kristallinität (XRD) bezogen auf das Ausgangszeolithpulver von 92% und eine statische Wasseraufnahmekapazität von 24,7%. Der über die Wasseradsorptionskapazität bestimmte Zeolithgehalt beträgt 99,6%.

Das auf diese Weise hergestellte Material hat einen Restfeuchtegehalt von 0,8 Ma.-% (bestimmt mittels Karl-Fischer-Titration (700 °C)).

In folgender Tabelle ist ein Vergleich zwischen dem Ausgangszeolithpulver, den tongebundenen sowie den bindemittelfreien Zeolith-Waben mit Linde Typ A-Struktur wiedergegeben.

**Tabelle 2: Vergleich zwischen Zeolith 4A-Pulver, tongebundenem und bindemittelfreien Zeolith 4A.**

| | Zeolith 4A-Pulver (Ausga ngsmaterial 1) | Tongebunde Zeolith 4A-Wabe (konventioneller kompakter Formkörper) | Bindemittelfreie Wabe (Zeolith 4A, Beispiel 1) |
|---|---|---|---|
| Kristallinität (Wasseraufnahmekapazität; bezogen auf das Zeolith 4A-Ausgangspulver) / % | 100 | 79,8 | 99,6 |
| Kristallinität (XRD bezogen auf das Zeolith 4A-Ausgangspulver) / % | 100 | 78 | 92 |
| Modul | 2,00 | - | 2,00 |
| Wasseraufnahmekapazität / Ma-% | 24,8 | 19,8 | 24,7 |
| Mittlerer Porendurchmesser des Transportporensystems / µm | | 0,30 | 0,48 |
| statische CO₂-Adsorptionskapazität bei 25 °C/ cm³/g | | | |
| bei 1,8 Torr | 31,3 | 19,2 | 30,1 |
| bei 34 Torr | 66,4 | 47,5 | 65,6 |
| bei 250 Torr | 84,7 | 63,0 | 82,2 |
| statische N₂-Adsorptionskapazität bei 30 °C, 750 mbar / cm³/g | 8,4 | 6,5 | 8,9 |

Kristallinität (XRD): Röntgenpulverdiffraktometer (XRD) "D4 ENDEAVOR" der Fa. Bruker-AXS GmbH, Karlsruhe, Softwarepaket "DIFFRACplus"
Wasseraufnahmekapazität: Das Material wird 2 h bei 450 °C aktiviert und bei 55% relativer Feuchte und 25 °C mit Wasser bis zum Erreichen des Gleichgewichts beladen.
Mittlerer Porendurchmesser: Hg-Porosimeter PASCAL P140, -P440 der Firma Porotec.
Statische CO₂- und N₂-Adsorptionskapazität: Das Material wird 2 h unter 0,01 mbar bei 400 °C aktiviert. Die Messung erfolgt bei 25 °C an einem Sorptionsgerät "GEMINI" der Fa. Micromeritics.

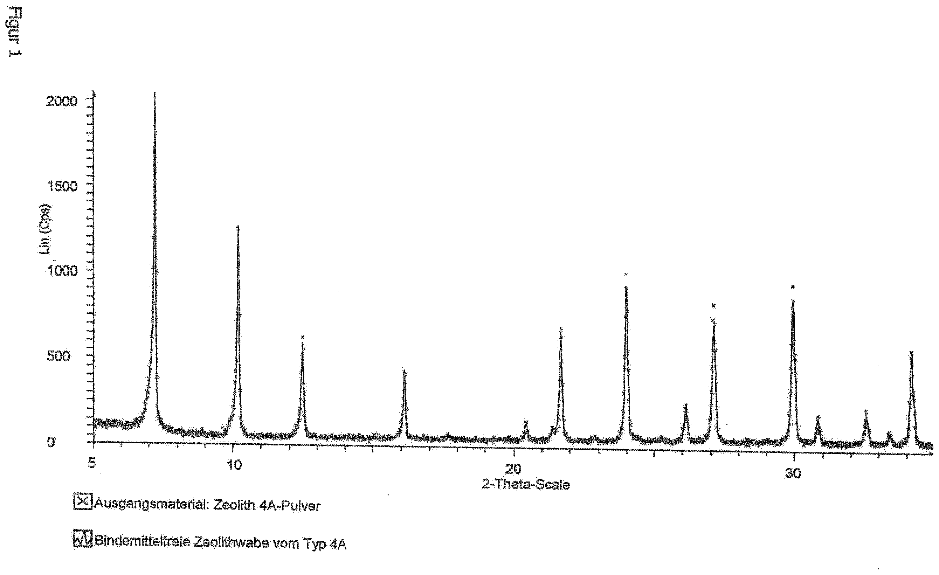

In Abbildung 1 sind die Diffraktogramme von Zeolith 4A-Pulver (unterbrochene Linie, Ausgangsmaterial 1) und der hergestellten kompakten zeolithischen Formkörper (durchgezogene Linie, Beispiel 1) dargestellt. Diese sind annähernd identisch.

### Beispiel 2 (erfindungsgemäß)

48 g der bindemittelfreien Zeolithwaben vom Typ 4A gemäß Beispiel 1 (erfindungsgemäß) werden 1 h bei Raumtemperatur in Wasser und anschließend 48 h bei Raumtemperatur in 1 l einer 5%igen Kaliumchloridlösung gelagert. Gelegentlich wird die überstehende Lösung geschwenkt. Anschließend wird die Lösung abgegossen, die Waben gewaschen und getrocknet. Die erhaltenen kompakten zeolithischen Formkörper vom Typ 3A zeigen folgende Merkmale:

| | Vergleichmaterial 1 (Zeolith 3A-Pulver) | Bindemittelfreie Wabe (Zeolith 3A, Beispiel 2) |
|---|---|---|
| Ionenaustausch-grad / % | 58 | 63,5 |
| Wasseraufnahmekapazität / % | 25,7 | 22,6 |

### Beispiel 3 (erfindungsgemäß)

48 g der bindemittelfreien Zeolithwaben vom Typ 4A gemäß Beispiel 1 (erfindungsgemäß) werden 1 h bei Raumtemperatur in Wasser und anschließend 48 h bei Raumtemperatur in 1 l einer 5%igen Calciumchloridlösung gelagert. Gelegentlich wird die überstehende Lösung geschwenkt. Anschließend wird die Lösung abgegossen, die kompakten zeolithischen Formkörper gewaschen und getrocknet. Die erhaltenen Waben vom Zeolithtyp 5A zeigen folgende Merkmale:

| | Vergleichmaterial 1 (Zeolith 5A-Pulver) | Bindemittelfreie Wabe (Zeolith 5A, Beispiel 3) |
|---|---|---|
| Ionenaustauschgrad / % | 74 | 76 |
| Wasseraufnahmekapazität / % | 22,8 | 22,7 |

### Beispiel 4 (erfindungsgemäß)

Ausgehend von 1,7 kg Zeolith X-Pulver (Ausgangsmaterial 2), 850 g Kaolin (Ausgangsmaterial 4) und 25 g Natronlaugelösung (50%ig) wird mittels 5% der organischen Komponente mit temporärer Binderwirkung MHPC 20000, 2% Glycerin, Gleitmittel und Wasser eine plastische Masse in einem Doppelwellenkneter hergestellt. Die Formgebung der plastifizierten Masse erfolgt in einem Vakuumschneckenextruder. Dabei wird die Masse in der Vakuumkammer des Extruders entlüftet und mittels einer Pressschnecke durch ein 7-kanalbildendes Rohr-Werkzeug gepresst. Das gebildete 7-Kanalrohr entsteht als kompakter Endlosformkörper. Er wird nach der Extrusion auf eine für die nachfolgenden technologischen Schritte geeignete Länge von 500 mm geschnitten, auf einen Trockenverlust von 5% getrocknet und danach liegend auf Brennhilfsmitteln bei 550°C getempert:
Mittels Diamanttrennscheiben werden die getemperten 7-Kanalrohre trocken auf 100 mm Länge geschnitten.

Nach der Temperung werden die nicht-zeolithischen Bestandteile der 7-Kanalrohre in Zeolith mit Faujasit-Struktur umgewandelt. Dafür werden 7-Kanalrohre mit einem Gesamtgewicht von 30 g mit 200 ml deionisiertem Wasser gewässert, d.h. 60 min in Wasser belassen. Nach Ablauf der vorgegebenen Zeit wird das Wasser weitestgehend abgegossen und durch die Reaktionslösung ersetzt. Diese besteht aus 240 ml deionisiertem Wasser, 54 g 50%iger Natronlauge und 15 g Natronwasserglas (8% Na₂O, 27% SiO₂). Die gewässerten 7-Kanalrohre werden in dieser Lösung 2 h bei Raumtemperatur gealtert, anschließend auf 85 °C erhitzt und bei dieser Temperatur für 16 h gehalten.

Nach Ablauf der Reaktionszeit wird das Material abgekühlt und die überstehende Lösung durch Dekantieren entfernt. Die 7-Kanalrohre werden drei mal mit je 200 ml deionisiertem Wasser gewaschen, mit Hilfe von Unterdruck über einen Büchner-Trichter möglichst trocken filtriert und anschließend unter einer IR-Lampe vollkommen getrocknet.

Das auf diese Weise hergestellte Material zeigt eine Kristallinität (XRD) bezogen auf das Ausgangszeolithpulver von 90% und eine statische Wasseraufnahmekapazität von 29,2%. Der über die Wasseradsorptionskapazität bestimmte Zeolithanteil beträgt 94,8%.

In folgender Tabelle ist ein Vergleich zwischen dem Ausgangszeolithpulver sowie den kompakten, bindemittelfreien Zeolith-Formkörpern mit Faujasit-Struktur wiedergegeben.

**Tabelle 3: Vergleich zwischen Zeolith-Pulver und bindemittelfreien Zeolith-7-Kanalrohren mit Faujasit-Struktur.**

| | Zeolith X-Pulver (Ausgangsmaterial 2) | Bindemittelfreier kompakter Formkörper der Faujasit-Struktur und Zeolith X-Zusammensetzunq (Beispiel 4) |
|---|---|---|
| Kristallinität (Wasseraufnahmekapazität; bezogen auf das Zeolith 4A-Ausgangspulver) / % | 100 | 94,8 |
| Kristallinität (XRD bezogen auf das Zeolith X-Ausgangspulver) / % | 100 | 90 |
| Modul | 2,34 | 2,35 |
| Wasseraufnahmekapazität / Ma-% | 30,8 | 29,2 |
| Mittlerer Porendurchmesser des Transportporensystems / µm | | 0,89 |
| statische CO₂-Adsorptionskapazität bei 25 °C/ cm³/g | | |
| bei 1,8 Torr | 35,0 | 28,9 |
| bei 34 Torr | 81,7 | 74,8 |
| bei 250 Torr | 120,7 | 112,1 |
| statische N₂-Adsorptionskapazität bei 30 °C, 750 mbar / cm³/g | 10,7 | 9,8 |
| Mikroporenvolumen / cm³/g | 0,33 | 0,31 |

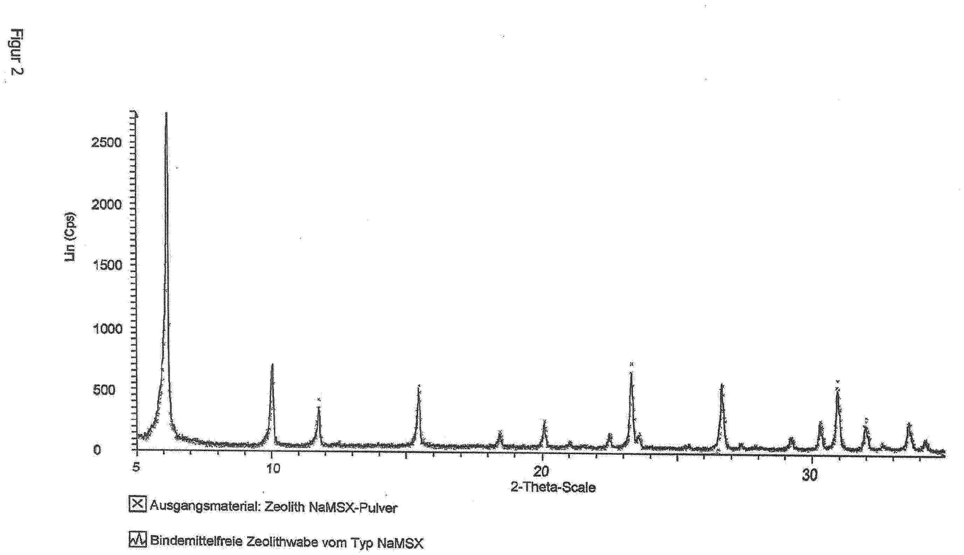

In Abbildung 2 sind die Diffraktogramme von Zeolith X-Pulver (unterbrochene Linie, Ausgangsmaterial 2) und dem hergestellten zeolithischen 7-Kanalrohr mit Faujasit-Struktur und Zeolith X-Zusammensetzung (durchgezogene Linie, Beispiel 4) dargestellt. Diese sind annähernd identisch.

### Beispiel 5 (erfindungsgemäß)

Ausgehend von 2,5 kg Zeolith Y-Pulver (Ausgangsmaterial 3), 300 g Kaolin (Ausgangsmaterial 4 und 80 g Natronlaugelösung (50%ig) wird mittels 5% der organischen Komponente mit temporärer Binderwirkung MHPC 20000, 2% Glycerin, Gleitmittel und Wasser eine plastische Masse in einem Doppelwellenkneter hergestellt. Die Formgebung der plastifizierten Masse erfolgt in einem Vakuumschneckenextruder. Dabei wird die Masse in der Vakuumkammer des Extruders entlüftet und mittels einer Pressschnecke durch ein 1-Kanalrohr erzeugendes Werkzeug gepresst. Das 1-Kanalrohr entsteht als Endlosstrang. Er wird nach der Extrusion auf eine für die nachfolgenden technologischen Schritte geeignete Länge von 500 mm geschnitten, auf einen Trockenverlust von 5% getrocknet und danach liegend auf Brennhilfsmitteln bei 550°C getempert.

Mittels Diamanttrennscheiben werden die getemperten 1-Kanaolrohre trocken auf 200 mm Länge geschnitten.

Nach der Temperung werden die nicht-zeolithischen Bestandteile der 1-Kanalrohre in Zeolith mit Faujasit-Struktur umgewandelt. Dafür werden 1-Kanalrohre mit einem Gesamtgewicht von 30 g mit 200 ml 1%iger Natronlaugelösung gewässert, d.h. 60 min in 1%iger Natronlaugelösung belassen. Nach Ablauf der vorgegebenen Zeit wird die Natronlauge weitestgehend abgegossen und durch die Reaktionslösung ersetzt. Diese besteht aus 190 ml deionisiertem Wasser, 8 g 50%iger Natronlauge und 60 g Natronwasserglas (8% Na₂O, 27% SiO₂). Die gewässerten 1-Kanalrohre werden in dieser Lösung 2 h bei Raumtemperatur gealtert und anschließend auf 90 °C erhitzt und bei dieser Temperatur für 20 h gehalten.

Nach Ablauf der Reaktionszeit wird das Material abgekühlt und die überstehende Lösung durch Dekantieren entfernt. Die 1-Kanalrohre werden in 150 ml einer 1%igen Natronlaugelösung gewaschen und zwei mal mit je 150 ml deionisiertem Wasser gewaschen, mit Hilfe von Unterdruck über einen Büchner-Trichter möglichst trocken filtriert und anschließend unter einer IR-Lampe vollkommen getrocknet.

Das auf diese Weise hergestellte Material zeigt eine Kristallinität (XRD) bezogen auf das Ausgangszeolithpulver von 96% und eine statische Wasseraufnahmekapazität von 28,0%. Der mit Hilfe der Wasseradsorptionskapazität bestimmte Zeolithgehalt beträgt 96,2%.

In folgender Tabelle ist ein Vergleich zwischen dem Ausgangszeolithpulver und den bindemittelfreien 1-Kanalrohren mit Faujasit-Struktur und Zeolith Y-Zusammensetzung wiedergegeben.

**Tabelle 4: Vergleich zwischen Zeolith-Pulver und bindemittelfreien Zeolith-l-Kanalrohren der Faujasit-Struktur und Zeolith Y-Zusammensetzung.**

| | Zeolith Y-Pulver (Ausgangsmaterial 3) | Bindemittelfreier kompakter Formkörper der Faujasit-Struktur und Zeolith Y-Zusammensetzung (Beispiel 5) |
|---|---|---|
| Kristallinität (Wasseraufnahmekapazität; bezogen auf das Zeolith Y-Ausgangspulver) / % | 100 | 96,2 |
| Kristallinität (XRD bezogen auf das Zeolith Y-Ausgangspulver) / % | 100 | 96 |
| Modul | 5,3 | 5,3 |
| Wasseraufnahmekapazität / Ma-% | 29,1 | 28,0 |
| Mittlerer Porendurchmesser des Transportporensystems / µm | | 0,30 |
| statische CO₂-Adsorptionskapazität bei 25 °C/ cm³/g | | |
| bei 1,8 Torr | 3,9 | 4,4 |
| bei 34 Torr | 32,2 | 31,4 |
| bei 250 Torr | 94,8 | 90,8 |
| statische N₂-Adsorptionskapazität bei 30 °C, 750 mbar / cm³/g | 5,5 | 5,4 |
| Mikroporenvolumen / cm³/g | 0,33 | 0,32 |

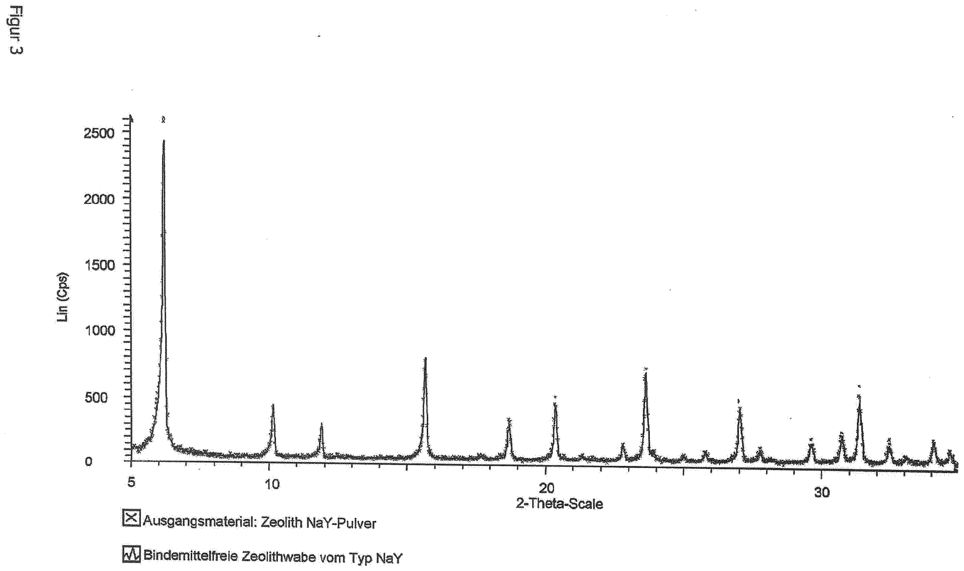

In Abbildung 3 sind die Diffraktogramme von Zeolith Y-Pulver (unterbrochene Linie, Ausgangsmaterial 3) und des hergestellten zeolithischen 1-Kanalrohrs (durchgezogene Linie, Beispiel 5) der Faujasit-Struktur und Zeolith Y-Zusammensetzung dargestellt. Diese sind annähernd identisch.

### Beispiel 6 (erfindungsgemäß)

Die Herstellung der 1-Kanalrohre erfolgt analog Beispiel 5.

Nach der Temperung werden die nicht-zeolithischen Bestandteile der 1-Kanalrohre in Zeolith mit Faujasit-Struktur umgewandelt. Dafür werden 1-Kanalrohre mit einem Gesamtgewicht von 30 g mit einer Reaktionslösung bestehend aus 190 ml deionisiertem Wasser, 8 g 50%iger Natronlauge und 60 g Natronwasserglas (8% Na₂O, 27% SiO₂) versetzt, anschließend auf 90 °C erhitzt und bei dieser Temperatur für 20 h gehalten.

Nach Ablauf der Reaktionszeit wird das Material abgekühlt und die überstehende Lösung durch Dekantieren entfernt. Die 1-Kanalrohre werden drei mal mit je 200 ml deionisiertem Wasser gewaschen, mit Hilfe von Unterdruck über einen Büchner-Trichter möglichst trocken filtriert und anschließend unter einer IR-Lampe vollkommen getrocknet.

Das auf diese Weise hergestellte Material zeigt eine Kristallinität (XRD) bezogen auf das Ausgangszeolithpulver von 81%, einen Modul von 5,3 und eine statische Wasseraufnahmekapazität von 26,9%. Der über die Wasseradsorption bestimmte Zeolithgehalt beträgt 92,4%.

### Beispiel 7 (erfindungsgemäß)

Die Herstellung der 1-Kanalrohre erfolgt analog Beispiel 5.

Nach der Temperung werden die nicht-zeolithischen Bestandteile in Zeolith mit Faujasit-Struktur umgewandelt. Dafür werden 1-Kanalrohre mit einem Gesamtgewicht von 30 g mit einer Lösung besteht aus 190 ml deionisiertem Wasser, 8 g 50%iger Natronlauge und 60 g Natronwasserglas (8% Na₂O, 27% SiO₂) versetzt und das Gemisch zwei 2 h bei Raumtemperatur gealtert, anschließend wird das Gemisch auf 90 °C erhitzt und bei dieser Temperatur für 20 h gehalten.

Nach Ablauf der Reaktionszeit wird das Material abgekühlt und die überstehende Lösung durch Dekantieren entfernt. Die 1-Kanalrohre werden drei mal mit je 200 ml deionisiertem Wasser gewaschen, mit Hilfe von Unterdruck über einen Büchner-Trichter möglichst trocken filtriert und anschließend unter einer IR-Lampe vollkommen getrocknet.

Das auf diese Weise hergestellte Material zeigt eine Kristallinität (XRD) bezogen auf das Ausgangszeolithpulver von 84%, einen Modul von 5,3 und eine statische Wasseraufnahmekapazität von 27,5%. Der über die Wasseradsorption bestimmte Zeolithgehalt beträgt 94,5%.

### Beispiel 8 (erfindungsgemäß)

Aus Zeolith mit Linde Typ A-Struktur (Ausgangsstoff 1), Kaolin (Ausgangsstoff 4) und Natronlauge im Verhältnis 30 Masse-Teile Kaolin (trocken) zu 70 Masse-Teile Zeolith 4A (trocken) zu 3,5 Masse-Teile einer 50%igen NaOH-Lösung wird unter tropfenweiser Zugabe einer 2% 10%igen Mowiol-Binderlösung in einem Mischer bei 1000 U/min eine feuchte Mischung hergestellt. Die Mischung wird zur Homogenisierung der Feuchte 24 Stunden abgedeckt gelagert. Danach wird die Mischung durch ein Sieb mit einer Maschenweite von 1 mm gerieben und das so erhaltene Siebgranulat auf einen Trockenverlust von 6 % getrocknet. Nach der Trocknung wird das Granulat auf einer Trockenpresse mit einem Pressdruck von 600 MPa zu Zylindern mit einem Durchmesser von 18 mm und einer Dicke von 10 mm vorgepresst. Indem die Presskörper durch ein 1 mm-Sieb gerieben werden, erhält man ein pressfähiges Granulat. Aus diesem Granulat werden anschließend auf der Trockenpresse mit einem spezifischen Pressdruck von 1000 MPa Formkörper mit einem Durchmesser von 60 mm und einer Dicke von 3 mm hergestellt. Das Tempern dieser Scheiben erfolgt liegend auf Brennplatten aus engobiertem SiC bei 500 °C.

Nach der Temperung werden die nicht-zeolithischen Bestandteile der Formkörper analog Beispiel 1 in Zeolith mit Linde Typ A-Struktur umgewandelt.

**Tabelle 5: Eigenschaften der bindemittelfreien Zeolith 4A-Scheiben.**

| | Zeolith 4A-Pulver (Ausqanqsmaterial 1) | Bindemittelfreie Scheibe (Zeolith 4A, Beispiel 8) |
|---|---|---|
| Kristallinität (XRD bezogen auf das Zeolith 4A-Ausgangspulver) / % | 100 | 92 |
| Kristallinität (Wasseraufnahmekapazität; bezogen auf das Zeolith 4A-Ausgangspulver) / % | 100 | 98,8 |
| Modul | 2,00 | 2,01 |
| Wasseraufnahmekapazität / Ma-% | 24,8 | 24,5 |
| Mittlerer Porendurchmesser des Transportporensystems / µm | - | 0,71 |

### Beispiel 9 (erfindungsgemäß)

In einer 10 l-Mahltrommel werden zunächst 4 kg Mahlkugeln mit einer Größe von 20 mm eingewogen, danach 4 kg einer Rohstoffmischung bestehend aus 70 Masse-Teile Zeolith 4A-Pulver (trocken) und 30 Masse-Teile Kaolin (trocken) zugegeben. Nach Zugabe von 4 l deionisiertem Wasser und 0,3 % Dispergator Dolapix CE64 wird die Mahltrommel verschlossen und der Schlicker 24 h auf einem Mahlgestell gemahlen. Nach Ablauf der Mahldauer wird der Schlicker durch ein 0,1 mm Sieb gegossen. Das Gießen des Schlickers erfolgt als Platte der Abmessung 100 x 100 x 12 mm³ in trockene Gipsformen. Nach einer Standzeit von ca. 75 min (abhängig von der Scherbenbildung, die wiederum von Raumtemperatur und Luftfeuchte abhängen) wird die Platte entformt und auf einen Trockenverlust von 5% getrocknet. Die getrockneten Platten werden liegend auf Brennplatten aus engobiertem SiC bei 500 °C getempert.

Nach der Temperung werden die nicht-zeolithischen Bestandteile dieser Formkörper in Zeolith mit Linde Typ A-Struktur analog Beispiel 1 umgewandelt.

**Tabelle 6: Eigenschaften der bindemittelfreien Zeolith 4A-Platte.**

| | Zeolith 4A-Pulver (Ausgangsmaterial 1) | Bindemittelfreie Scheibe (Zeolith 4A, Beispiel 8) |
|---|---|---|
| Kristallinität (XRD bezogen auf das Zeolith A-Ausgangspulver) / % | 100 | 92 |
| Kristallinität (Wasseraufnahmekapazität; bezogen auf das Zeolith 4A-Ausgangspulver) / % | 100 | 98,8 |
| Modul | 2,00 | 2,01 |
| Wasseraufnahmekapazität / Ma-% | 24,8 | 24,5 |

### Literaturangaben

¹ D. W. Breck, Zeolite Molecular Sieves, John Wiley & Sons, New York, 1976, S. 86.
² K. Schuman, B. Unger, A. Brandt; CIT 2010, 82, 6, 929.
³ R. Xu, J. Chen, Z. Gao und W. Yan (eds.), Stud. Surf. Sci. Catal. 170: Proc. 15th. Intern. Zeol. Conf., Bejing 2007, Elsevier, 2007**.**
⁴ A. Hauer, Dissertation, TU Berlin, 2002**.**
⁵ A. Hauer, 23. deutsche Zeolithtagung 2.-4. März 2011, Erlangen (Book of Abstracts, Dechema, S. 36).
⁶ J. Jänchen, D. Ackermann, E. Weiler, H. Stach und W. Brösicke, Proc. Third Workshop of IEA/ECES Annex 17, 1-2 Oct. 2002, Tokyo.
⁷ S.J. Schmieg, B.K. Cho, S.H. Oh; Applied Catalysis B: Environmental, 2004,49,113-125.
⁸ S.B.C. Pergher, R.M. Dallago, R.C. Veses, C.E. Gigola, I.M. Baibich; Journal of Molecular Catalysis A: Chemical, 2004,209,107-115.
⁹ H. Richter, I. Voigt, J.-T. Kühnert, Desalination 2006, 199, 92.
¹⁰ J. T. Mullhaupt, P. C. Stephenson, US Patent 5 554 208, 1995**.**
¹¹ K. Steigleder, US Patent 5 190 903, 1991**.**
¹² H. Watanabe, T. Takewaki, M. Yamazaki, H. Kakiuchi, K. Inagaki, Kouji, A. Kosaka, N. Hosokawa, US Patent 7 527 777, 2005**.**
¹³ A. Pfenninger in "Molecular Sieves - Science and Technology", Band 2, Springer-Verlag, 1999, 163.
¹⁴ T. Takeuchi, M. Mouri, S. Okabayashi, S. Miyamura; US Patent 5 387 564, 1995**.**
¹⁵ K. Schumann, A. Brandt, B. Unger, F. Scheffler, Tagungsband zum Jahrestreffen des Fachausschusses Adsorption, 24.-25.03.2011, Würzburg, 24.
¹⁶ H. Kerskes, K. Sommer, H. Müller-Steinhagen, Abschlussbericht: MonoSorp Ein integrales Konzept zur solarthermischen Gebäudeheizung mit Sorptionswärmespeicher, Förderungsnummer: BWK25006, S. 23ff.
¹⁷ M. Minami, K. Enomoto; JP Patent 62 283 812 1987**.**
¹⁸ P. A. Howell, N. A. Acara; US Patent 3 119 660 1964.
¹⁹ H. Keshavan, O.P. Siclovan, D. Hancu; US Patent 2009/0318283, 2009**.**
²⁰ Y. Huang, A. Bar-Ilan, US Patent 6 759 358, 2004**.**
²¹ F. Scheffler, R. Herrmann, W. Schwieger, M. Scheffler, Microporous and Mesoporous Materials, 67,2004,53-59.
²² D.E. Hildebrandt, US Patent 4 381 256, 1983**.**
²³ A. Brandt, J. Schmeißer, B. Unger, H. Tschritter, U. Henkel, B. Gojdár, D. Gruhle, G. Winterstein; DE Patent 10 2008 046 155, 2009**.**
²⁴ J. P. Verduijn; US Patent 5 665 325 1997*.*
²⁵ G. Heinze, G. Reiss, F. Schwochow, G. Ulisch; US Patent 3 773 690 1973**.**
²⁶ B. Hees, L. Puppe, G. Reiss; US Patent 5 962 358, 1999**.**
²⁷ D. Bathen, M. Breitbach, "Adsorptionstechnik", Springer-Verlag, 2001, 13.
²⁸ T. Takeuchi, M. Mouri, S. Okabayashi, S. Miyamura; US Patent 5387564, 1995**.**
²⁹ H. Miyamoto, M. Ohta, K. Ishikawa, Y. Sukeda, M. Kaji, US Patent 5 518 678, 1995**.**
³⁰ H.-G. Fritz, C. Trefzger, H.H. Höfer; DE Patent 19815564, 1999**.**
³¹ S.B. Ogunwumi, P.D. Tepesch, R.R. Wusirika; US Patent 2010/0304957, 2010**.**

## Patentansprüche

1. Kompakte zeolithische Formkörper mit einer Raumausfüllung von 80 % oder mehr, **dadurch gekennzeichnet, dass** die Formkörper einen mittels geeigneter Adsorptionsmethoden bestimmten Zeolithanteil von mindestens 90% und vorzugsweise mindestens 95% aufweisen.

2. Kompakte zeolithische Formkörper gemäß Anspruch 1, **dadurch gekennzeichnet, dass** die Formköper auf Zeolith Y, vorzugsweise mit einem molaren SiO₂/Al₂O₃ Verhältnis größer 4,9 oder Zeolith X oder Zeolith A beruhen.

3. Kompakte zeolithische Formkörper gemäß Anspruch 1 oder 2, **dadurch gekennzeichnet, dass** sie in Form einer Platte, eines Rohrs, eines Vollzylinders oder als Wabenstruktur vorliegen.

4. Verfahren zur Herstellung kompakter zeolithischer Formkörper gemäß Ansprüchen 1 bis 3, **dadurch gekennzeichnet, dass**
a) ein formbares Gemisch, umfassend Zeolith und eine oder mehrere Zeolith-Vorläufer-Komponenten in einem Gewichts-Verhältnis von 10:1 bis 1:10 und gegebenenfalls Wasser und gegebenenfalls ein oder mehrere organische Zusatzstoffe zu Formkörpern verarbeitet wird,
b) die so erhaltenen Formkörper einer thermischen Behandlung bei einer Temperatur von 550 °C bis 850 °C unterzogen werden, und
c) die thermisch behandelten Formkörper gewässert, gealtert und mit einer weiteren Komponente in Kontakt gebracht werden, aus der in Kombination mit den Zeolith-Vorläufer-Komponenten Zeolith herstellbar ist und Bedingungen ausgesetzt werden, unter denen sich aus der weiteren Komponente und den Zeolith-Vorläufer-Komponenten Zeolith bildet, wobei es sich bei der weiteren Komponente um eine Alkalisilikat- und/oder Alkalialuminatlösung handelt.

5. Verfahren gemäß Anspruch 4, **dadurch gekennzeichnet, dass** das Gemisch aus Zeolith und den Zeolith-Vorläufer-Komponenten durch Extrusion, Pressen oder Gießen in eine Form gebracht wird.

6. Verfahren gemäß Ansprüche 4 oder 5, **dadurch gekennzeichnet, dass** als Haupt-Zeolith-Vorläufer-Komponente Kaolin verwendet wird.

7. Verfahren gemäß einem der Ansprüche 4 bis 6, **dadurch gekennzeichnet, dass** der Zeolith und die Zeolith-Vorläufer-Komponenten in Schritt a) in einem Gewichts-Verhältnis von 1:1 bis 6:1 vorliegt.

8. Verfahren gemäß einem der Ansprüche 4 bis 7, **dadurch gekennzeichnet, dass** die thermische Behandlung in Schritt b) bei einer Temperatur von 550 bis 650 °C erfolgt.

9. Verfahren gemäß einem der Ansprüche 4 bis 8, **dadurch gekennzeichnet, dass** nach der thermischen Behandlung im Schritt b) eine Wässerung im Schritt c) folgt.

10. Verfahren gemäß einem der Ansprüche 4 bis 9, **dadurch gekennzeichnet, dass** als weitere Komponente im Schritt c) eine Natriumsilikatlösung und/oder eine Natriumaluminatlösung verwendet wird.

11. Verfahren gemäß einem der Ansprüche 4 bis 9, **dadurch gekennzeichnet, dass** das in Kontakt bringen der weiteren Komponente und der Zeolith-Vorläufer-Komponenten in Schritt c) bei einer Temperatur im Bereich von 75 °C bis 100 °C, vorzugsweise von 80 °C bis 95 °C erfolgt.

12. Verfahren gemäß Anspruch 11, **dadurch gekennzeichnet, dass** das in Kontakt bringen der weiteren Komponente und der Zeolith-Vorläufer-Komponenten über einen Zeitraum von 1 bis 48 h, vorzugsweise von 8 h bis 24 h erfolgt.

13. Verfahren nach Anspruch 11 oder 12, **dadurch gekennzeichnet, dass** das Inkontaktbringen der weiteren Komponente und der Zeolith-Vorläufer-Komponenten im Schritt c) zusätzlich eine der Temperaturbehandlung bei 75 °C bis 100 °C vorausgehende Behandlung bei einer Temperatur von 15 bis 60 °C, vorzugsweise von 10 bis 35 °C, über einen Zeitraum von 0,5 h bis 24 h, vorzugsweise von 1 h bis 5 h umfasst.

14. Verfahren gemäß einem der Ansprüche 4 bis 13, **dadurch gekennzeichnet, dass** das Gemisch nach dem Schritt c) mit einer oder mehreren Alkalihydroxidlösungen und Wasser, vorzugsweise deionisiertem Wasser, gewaschen, getrocknet und bis zu einem Restfeuchtegehalt von < 2 Gew.-%, vorzugsweise < 1 Gew.-% aktiviert wird.

15. Verwendung kompakter zeolithischer Formkörper gemäß einem der Ansprüche 1 bis 3 für Adsorptionsprozesse oder für thermisch-chemische Energiespeicherung oder als Katalysator oder als Bestandteil eines Katalysators oder als Trägermaterial für Zeolithmembranen.

## Claims

1. Compact zeolite preforms having a space filling of 80% or more, **characterized in that** the preforms have a zeolite content of at least 90% and preferably at least 95%, determined by means of suitable adsorption methods.

2. Compact zeolite preforms according to claim 1, **characterized in that** the preforms are based on zeolite Y, preferably with a molar SiO₂/ Al₂O₃ ratio greater than 4.9 or zeolite X or zeolite A.

3. Compact zeolite preforms according to claim 1 or 2, **characterized in that** they are present in the form of a plate, a tube, a solid cylinder or as a honeycomb structure.

4. Method for the production of compact zeolite preforms according to claims 1 to 3, **characterized in that**
a) a moldable mixture, comprising zeolite and one or more zeolite precursor components in a weight ratio of 10:1 to 1:10 and optionally water and optionally one or more organic additives, is processed into preforms,
b) the preforms thus obtained are subjected to a thermal treatment at a temperature of 550°C to 850°C, and
c) the thermally treated preforms are soaked in water, aged and brought into contact with a further component from which zeolite is producible in combination with the zeolite precursor components and are exposed to conditions under which zeolite forms from the further component and the zeolite precursor components, wherein the further component is an alkali silicate and/or alkali aluminate solution.

5. Method according to claim 4, **characterized in that** the mixture of zeolite and the zeolite precursor components is formed into a shape by extrusion, pressing or casting.

6. Method according to claims 4 or 5, **characterized in that** kaolin is used as the main zeolite precursor component.

7. Method according to one of claims 4 to 6, **characterized in that** the zeolite and the zeolite precursor components in step a) are present in a weight ratio of 1:1 to 6:1.

8. Method according to one of claims 4 to 7, **characterized in that** the thermal treatment in step b) is carried out at a temperature of 550 to 650°C.

9. Method according to one of claims 4 to 8, **characterized in that** the thermal treatment in step b) is followed by soaking in water in step c).

10. Method according to one of claims 4 to 9, **characterized in that** a sodium silicate solution and/or a sodium aluminate solution is used as a further component in step c).

11. Method according to one of claims 4 to 9, **characterized in that** contacting the further component and the zeolite precursor components in step c) is carried out at a temperature in the range from 75°C to 100°C, preferably from 80°C to 95°C.

12. Method according to claim 11, **characterized in that** the contacting of the further component and the zeolite precursor components is carried out over a period from 1 to 48 h, preferably from 8 h to 24 h.

13. Method according to claim 11 or 12, **characterized in that** the contacting of the further component and the zeolite precursor components in step c) additionally comprises a treatment preceding the temperature treatment at 75°C to 100°C at a temperature of 15 to 60°C, preferably of 10 to 35°C, for a period of 0.5 h to 24 h, preferably of 1 h to 5 h.

14. Method according to one of claims 4 to 13, **characterized in that** the mixture after step c) is washed with one or more alkali hydroxide solutions and water, preferably deionized water, dried and activated to a residual moisture content of <2 wt.%, preferably <1 wt.%.

15. Use of compact zeolite preforms according to one of claims 1 to 3 for adsorption processes or for thermal-chemical energy storage or as catalyst or as component of a catalyst or as support material for zeolite membranes.

## Revendications

1. Corps façonnés zéolithiques compacts ayant un taux de remplissage de 80 % ou plus, **caractérisés en ce que** les corps façonnés ont une proportion de zéolithe, déterminée au moyen de méthodes d'adsorption appropriées, d'au moins 90 % et de préférence d'au moins 95 %.

2. Corps façonnés zéolithiques compacts selon la revendication 1, **caractérisés en ce que** les corps façonnés sont à base de zéolithe Y, de préférence avec un rapport molaire SiO₂/Al₂O₃ supérieur à 4,9, ou à base de zéolithe X ou de zéolithe A.

3. Corps façonnés zéolithiques compacts selon la revendication 1 ou 2, **caractérisés en ce qu'**ils se présentent sous la forme d'une plaque, d'un tube, d'un cylindre plein ou d'une structure en nid d'abeille.

4. Procédé pour la production de corps façonnés zéolithiques compacts selon les revendications 1 à 3, **caractérisé en ce que**
a) un mélange façonnable comprenant de la zéolithe et un ou plusieurs composants précurseurs de zéolithe dans un rapport pondéral de 10 : 1 à 1 : 10, et, éventuellement, de l'eau et, éventuellement, un ou plusieurs additifs organiques, est transformé en corps façonnés,
b) les corps façonnés ainsi obtenus sont soumis à un traitement thermique à une température de 550 °C à 850 °C, et
c) les corps façonnés traités thermiquement sont humidifiés, vieillis et mis en contact avec un autre composant à partir duquel la zéolithe peut être produite en combinaison avec les composants précurseurs de zéolithe, et exposés à des conditions dans lesquelles la zéolithe est formée à partir de l'autre composant et des composants précurseurs de zéolithe, l'autre composant étant une solution de silicate alcalin et/ou d'aluminate alcalin.

5. Procédé selon la revendication 4, **caractérisé en ce que** le mélange de zéolithe et de composants précurseurs de zéolithe est mis en forme par extrusion, pressage ou coulée.

6. Procédé selon les revendications 4 ou 5, **caractérisé en ce que** le kaolin est utilisé comme principal composant précurseur de zéolithe.

7. Procédé selon l'une des revendications 4 à 6, **caractérisé en ce que** la zéolithe et les composants précurseurs de zéolithe de l'étape a) sont présents dans un rapport pondéral de 1 : 1 à 6 : 1.

8. Procédé selon l'une des revendications 4 à 7, **caractérisé en ce que** le traitement thermique de l'étape b) est réalisé à une température de 550 °C à 650 °C.

9. Procédé selon l'une des revendications 4 à 8, **caractérisé en ce que** le traitement thermique de l'étape b) est suivi d'une humidification dans l'étape c).

10. Procédé selon l'une des revendications 4 à 9, **caractérisé en ce qu'**une solution de silicate de sodium et/ou une solution d'aluminate de sodium est utilisée comme autre composant dans l'étape c).

11. Procédé selon l'une des revendications 4 à 9, **caractérisé en ce que** la mise en contact de l'autre composant et des composants précurseurs de zéolithe dans l'étape c) est effectuée à une température dans la plage de 75 °C à 100 °C, de préférence de 80 °C à 95 °C.

12. Procédé selon la revendication 11, **caractérisé en ce que** la mise en contact de l'autre composant et des composants précurseurs de zéolithe s'effectue sur une période de 1 à 48 h, de préférence de 8 h à 24 h.

13. Procédé selon la revendication 11 ou 12, **caractérisé en ce que** la mise en contact de l'autre composant et des composants précurseurs de zéolithe dans l'étape c) comprend en supplément, avant le traitement thermique à une température de 75 °C à 100 °C, un traitement à une température de 15 à 60 °C, de préférence de 10 à 35 °C, sur une période de 0,5 h à 24 h, de préférence de 1 h à 5 h.

14. Procédé selon l'une des revendications 4 à 13, **caractérisé en ce qu'**après l'étape c), le mélange est rincé avec une ou plusieurs solutions d'hydroxyde alcalin et de l'eau, de préférence de l'eau déionisée, puis séché et activé jusqu'à une teneur en humidité résiduelle < 2% en poids, de préférence < 1% en poids.

15. Utilisation de corps façonnés zéolithiques compacts selon l'une des revendications 1 à 3 pour des processus d'adsorption ou pour le stockage d'énergie thermochimique ou comme catalyseur ou comme composant d'un catalyseur ou comme matériau de support pour des membranes zéolithiques.
